(19) Europäisches Patentamt
European Patent Office
Office européen des brevets

(11) Veröffentlichungsnummer: **0 021 414**
**B1**

(12) # EUROPÄISCHE PATENTSCHRIFT

(45) Veröffentlichungstag der Patentschrift: **23.06.82**

(51) Int. Cl.³: **C 09 D 5/38**, C 09 D 5/02, C 09 D 3/64

(21) Anmeldenummer: **80103580.9**

(22) Anmeldetag: **25.06.80**

(54) **Mit Wasser verdünnbare Bindemittelmischung und deren Verwendung zur Herstellung von einer Zweischichten-Metallic-Lackierung.**

(30) Priorität: **30.06.79 DE 2926584**

(43) Veröffentlichungstag der Anmeldung: **07.01.81 Patentblatt 81/1**

(45) Bekanntmachung des Hinweises auf die Patenterteilung: **23.06.82 Patentblatt 82/25**

(84) Benannte Vertragsstaaten: **AT BE DE FR GB IT NL SE**

(56) Entgegenhaltungen:
**CH-A-387 203**
**DE-A-2 043 331**
**DE-A-2 613 099**

(73) Patentinhaber: **HOECHST AKTIENGESELLSCHAFT, Postfach 80 03 20, D-6230 Frankfurt/Main 80 (DE)**

(72) Erfinder: **Esser, Klaus, Lauterbacher Strasse 27, D-6000 Frankfurt am Main 61 (DE)**
Erfinder: **Dürr, Helmut, Dr., Hansaallee 111, D-6000 Frankfurt am Main (DE)**
Erfinder: **Plath, Dieter, Dr., Hildastrasse 32, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Mit Wasser verdünnbare Bindemittelmischung und deren Verwendung zur Herstellung von einer Zweischichten-Metallic-Lackierung

Metallic-Lacke haben in den letzten Jahren in der Automobilindustrie sehr an Bedeutung gewonnen. Während früher noch ein großer Teil der Karosserien mit Einschicht-Metallic-Lacken versehen wurde, werden heute in steigendem Maß Automobile nach den Zwei-Schicht-Metallic-Verfahren, und zwar dem sogenannten »Naß-in-Naß-Verfahren« lackiert. Bei diesem Verfahren wird zuerst ein im wesentlichen physikalisch trocknender Basislack, der mit Aluminium, eventuell unter Zusatz anderer farbgebender Pigmente pigmentiert ist und anschließend nach kurzer Ablüftung ein Klarlack als Decklack aufgebracht. Der Basislack besteht hauptsächlich aus Lösungsmittel, einem physikalisch trocknenden Bindemittel, wie Celluloseacetobutyrat, einem ölfreien Polyester, Melaminharz und Pigmenten. Als solche finden außer Aluminium sowohl anorganische, wie Titandioxyd, Bleichromat, Eisenoxyde als auch organische Pigmente, wie Phthalocyanine, Chinacridone oder halogenierte Thioindigo-Pigmente Verwendung. Der Festkörpergehalt der Basislacke ist mit etwa 15% recht niedrig. Der Rest von 85% ist flüchtiges Lösungsmittel, das sich zum größten Teil aus Estern wie Äthylglykol-, Butyl-, Äthylacetat und Aromaten, wie Toluol oder Xylol, zusammengesetzt.

Als zweite Schicht wird nach einer Ablüftungszeit von nur wenigen Minuten ein Klarlack aufgetragen, der sowohl ein lufttrocknender Lack sein kann, wie etwa im Falle der Reparatur einer Karosserie, oder ein Einbrennlack, wie er bei der Autolackierung am Band Verwendung findet. Im letzteren Fall werden beide Lackschichten unter den üblichen Einbrennbedingungen (10—30 Minuten bei 120—150°C) zusammen ausgehärtet.

Der hohe Anteil an Lösungsmittel im Basislack stellt eine beachtliche Belastung für die Umwelt dar und verursacht darüber hinaus auch entsprechende Kosten, d. h. die Mehrbelastung durch Verwendung von Lösungsmittel und ihre umweltschonende Beseitigung. Es hat deshalb nicht an Versuchen gefehlt, den Festkörpergehalt anzuheben bzw. den Anteil an flüchtigen Lösungsmitteln zu reduzieren. Dabei wurde festgestellt, daß bei Anhebung des Festkörpergehaltes die anwendungstechnischen Eigenschaften des Lackes verschlechtert und die Qualität des Gesamtsystems beeinträchtigt werden, so daß dieser Weg zur Erreichung eines umweltfreundlichen und wirtschaftlichen Metallic-Basislack nicht gangbar ist. Ferner wurde versucht, den Metallic-Basislack auf wasserlösliche Bindemittel umzustellen, um dadurch Umweltfreundlichkeit und Wirtschaftlichkeit zu erreichen. Unzureichende Lagerstabilität, Schwierigkeiten beim Auftragen und die Ungleichmäßigkeit des Metallic-Effects sowie ein Vergrauen der Aluminiumanteile waren die schwerwiegendsten Nachteile.

Gegenstand der Erfindung ist nun eine mit Wasser verdünnbare Bindemittelmischung auf Basis

A) eines wasserlöslichen Kondensationsproduktes aus a) gesättigten oder ungesättigten, ölfreien, OH-Gruppen enthaltenden Polyestern aus mindestens einer Polycarbonsäure und mindestens einem mehrwertigen Alkohol, b) einem von Trimellithsäure abgeleiteten und diese noch enthaltenden Polycarbonsäuregemisch, c) mindestens einem epoxydierten Öl und d) basischen Verbindungen und
B) Metallpulver,
C) mit Wasser mischbaren Lösungsmitteln und gegebenenfalls
D) anderen Pigmenten und/oder Farbstoffen sowie gegebenenfalls
E) weiteren üblichen Zusätzen, wobei das Festkörpergewichtsverhältnis der Komponente a) zu Komponente b) 50 : 50 bis 90 : 10 beträgt, die zur Herstellung einer Zweischichten-Metallic-Lackschicht verwendbar ist, wobei die Mischung die genannten Nachteile bezüglich Lagerstabilität, Anwendbarkeit, Vergrauung und Umweltbelastung nicht aufweist.

Aus der DE-A 2 613 099 ist eine Dispersionsbeschichtungsmasse offenbart, die a) ein wäßriges Medium, b) Kunstharzteilchen und c) Aluminiumpigment enthält. Das Kunstharz kann eine Kombination von Polyester, z. B. einem thermoplastischen Polyesterharz, und Säureanhydrid oder einem verkappten Isocyanat sein.

Die erfindungsgemäß vorgeschlagenen speziellen Kondensationsprodukte aus OH-Gruppen enthaltenden Polyestern, einem Trimellithsäure enthaltenden Polycarbonsäuregemisch, einem epoxydierten Öl und basischen Verbindungen sind jedoch nicht offenbart. Gerade diese Zusammensetzung ist ein wesentliches Merkmal für die unerwarteten günstigen Eigenschaften der aus der erfindungsgemäßen Mischung hergestellten Basislacke für Metallbeschichtungen. Eine derartige Merkmalskombination konnte aber aus dieser Druckschrift nicht hergeleitet werden.

Wäßrige Lacke aus den erfindungsgemäßen Bindemittelmischungen besitzen überraschenderweise, auf eine geeignete Unterlage aufgebracht, trotz eines hohen Wassergehaltes, z. B. von 40 bis 70 Gew.-%, bezogen auf die Summe von Wasser und Lösungsmittel, eine sehr kurze Trockenzeit bei Raumtemperatur bis zur Erzielung staubtrockener bzw. klebfreier Schichten, die im allgemeinen weniger als 10 Minuten, meistens weniger als sechs Minuten, insbesondere drei bis fünf Minuten beträgt. Die Gründe für die kurze Trockenzeit sind nicht bekannt. Eventuell ist diese durch die leichte Lösungsmittelabgabe des Harzes und gegebenenfalls zusätzlich die Bildung von leicht flüchtigen

azeotropen Gemischen bedingt. Auch bei erhöhter Temperatur ist eine Trocknung möglich, wobei die Trockenzeit erheblich verkürzt wird, was besonders dann von Vorteil ist, wenn der in einem vorgegebenen Arbeitsprozeß zur Verfügung stehende Zeitbedarf knapp bemessen ist und für eine physikalische Trocknung nicht ausreicht. Die Bindemittelmischung weist ferner eine gute Stabilität bei der Lagerung bei Raumtemperatur auf und besitzt eine hervorragende Zwischenhaftung. Sie läßt sich einwandfrei auftragen; infolge der schnellen Antrocknung tritt kein Ablaufen an senkrechten Flächen und keine Wolkenbildung ein, sondern eine sehr gute Ausbildung des Metalleffekts. Weiterhin ist die Überlackierbarkeit ausgezeichnet, d. h. es findet keine Auflösung der angetrockneten Schicht durch den später aufgetragenen Decklack statt. Bei Verwendung von Aluminiumpigmenten wird die sogenannte »Vergrauung« nicht beobachtet.

Geeignete ölfreie Polyester mit freien OH-Gruppen (Komponente a)) können aus bekannten Polycarbonsäuren wie Phthalsäure, Isophthalsäure, Terephthalsäure, Trimellithsäure, Fumarsäure, Maleinsäure, Endomethylentetrahydrophthalsäure, Bernsteinsäure, Adipinsäure, Korksäure, Azelainsäure, Sebacinsäure, alkylsubstituierten Verbindungen dieser Säuren sowie deren möglichen Anhydriden hergestellt werden. Geeignete Alkoholkomponenten dieser Polyester sind z. B. bekannte mehrwertige Alkohole, wie Äthylenglykol, die Propandiole, Butandiole, Pentandiole, Neopentylglykol, Hexandiole, Diäthylenglykol, Glycerin, Trimethyloläthan, Trimethylolpropan, Pentaerythrit und Dipentaerythrit. Die Komponenten können jeweils einzeln oder im Gemisch eingesetzt werden. Die Polyester besitzen im allgemeinen OH-Zahlen im Bereich von 60 bis 150, insbesondere von 80 bis 120.

Trimellithsäurehaltige Polycarbonsäuregemische (Komponente b) sind solche, die Verbindungen der Formeln (I) bis (III) (siehe Formelblatt) enthalten und in der deutschen Patentanmeldung P 2 707 018.4 offenbart sind. In den Formeln (I) bis (III) sind

| | |
|---|---|
| R, R′ und R″ | gleich oder verschieden und 2- bis 6wertige, vorzugsweise 2wertige geradkettige oder verzweigte Kohlenwasserstoffe mit insgesamt 1 bis 12, vorzugsweise 2 bis 6 C-Atomen, die gegebenenfalls bis zu zwei olefinische Doppelbindungen aufweisen oder durch bis zu drei Ätherbrücken unterbrochen sind, |
| x und y | eine ganze Zahl von 2 bis 6, |
| t | eine ganze Zahl von 1 bis 5 und |
| z und u | Null oder eine ganze Zahl von 1 bis 5, |

wobei in den hier nur linear, d. h. für zweiwertige Rest R, R′ und R″ wiedergegebenen Formeln außer bei den Resten R′ und R″ auch bei dem Rest R Verzweigungen vorliegen können. Derartige verzweigte Polycarbonsäuren lassen sich durch eine einzige Formel nicht ohne weiteres darstellen. Wenn aufgrund der möglichen höheren Wertigkeit als 2 von R, R′ und R″ die Verbindungen I) bis III) verzweigt sind, können in den verschiedenen Zweigen die Indices x, y und z gleich oder verschieden sein. Verbindungen der Formel (I) sind z. B. mehrere Estergruppen aufweisende Ester der Trimellithsäure mit mehrwertigen, beispielsweise 2- bis 6wertigen gesättigten oder ungesättigten Alkoholen mit 2 bis 12 C-Atomen, einschließlich solchen mit bis zu 3 Äthergruppen. Geeignete Alkohole für die Herstellung dieser Verbindungen sind z. B. die bereits oben genannten Diole, sowie deren höhere Homologen bzw. ihre ungesättigten Analogen, z. B. Butendiole, ferner weitere Oligomere des Äthylenglykols, sowie die obengenannten höherwertigen Alkohole, wobei die Diole bevorzugt sind.

Geeignete Verbindungen der Formeln (I), (II) und (III) sind beispielsweise solche, in denen R, R′ und R″ vorzugsweise zweiwertig sind, aber je nach der Struktur und Wertigkeit des Ausgangsalkohols, auch verzweigt sein können. In Formeln (II) und (III) sind R, R′ und R″ gleich oder verschieden und haben die oben für R angegebene Bedeutung.

Typische Reste R, R′ und R″ sind z. B. $-(CH_2)_n-$, worin n = 2 bis 10 ist,

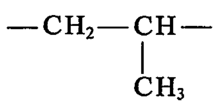

$-CH_2-CH{=}CH-CH_2-$

$-CH_2-CH_2-O-CH_2-CH_2-$

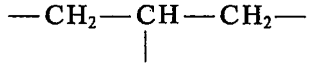

ferner solche der Formeln (IV) (siehe Formelblatt).

Die Verbindungen der Formel (II) sind also, wenn x = 2 ist, Diestertetracarbonsäuren und, wenn x = 3 ist, Triesterhexacarbonsäuren. Die Verbindungen der Formel (III) stellen beispielsweise oligomere Polycarbonsäuren mit mehreren Estergruppen dar.

Die Verbindungen der Formel (I) bis (III) lassen sich z. B. durch Hydrolyse eines Anhydridgruppen enthaltenden Gemisches, wie es bei der Umsetzung von Trimellithsäureanhydrid mit den entsprechenden zwei- und/oder höherwertigen Alkoholen in an sich bekannter Weise erhalten wird, herstellen. Dies kann mit oder ohne Lösungsmittel erfolgen. Wird in Gegenwart eines Lösungsmittels hydrolysiert, so kann man durch vorsichtiges Abdestillieren, gegebenenfalls unter vermindertem

Druck, auch lösungsmittelfreie Polycarbonsäuregemische erhalten. In vielen Fällen ist es aber möglich, ein Lösungsmittelgemisch so zu wählen, daß man für die Weiterverarbeitung geeignete Polycarbonsäurelösungen erhält. Besonders einfach gestaltet sich die Hydrolyse, wenn zu einer Schmelze oder einer Lösung eines Anhydridgemisches bei erhöhter Temperatur die für die Hydrolyse erforderliche Wassermenge zugegeben wird. Zur Vervollständigung der Hydrolyse wird noch einige Zeit bei dieser Temperatur nachgerührt.

Geeignete Lösungsmittel für die Herstellung der Komponente b) sind beispielsweise Äthylenglykolmonobutyläther-acetat, Butylacetat, Methylisobutylketon oder Mischungen daraus, z. B. aus Äthylenglykolmonobutylätheracetat und Xylol, z. B. im Verhältnis 1 : 1 bis 1 : 3.

Zur Charakterisierung der Anhydridgruppen enthaltenden Gemische eignet sich insbesondere die Gel-Permeations-Chromatographie (GPC) an mit Divinylbenzol vernetztem Polystyrolgel als Sorptionsmittel und mit Tetrahydrofuran als Elutionsmittel. Mit dieser Methode gelingt es, die Anhydridgemische in ihren Einzelkomponenten genau zu bestimmen, so daß der jeweilige Anteil der einzelnen Komponenten leicht und genau eingestellt werden kann. So lassen sich die Verbindungen der Formeln (I) bis (III) nach ihrer Struktur und Menge genau erfassen.

Zweckmäßig beträgt in der Komponente b) der Gehalt an Verbindungen der Formeln (I) bis (III) 70 bis 99,8, vorzugsweise 80 bis 95 Gew.-% und derjenige an Trimellithsäure 0,1 bis 30, vorzugsweise 5 bis 20 Gew.-%.

Der Gehalt an oligomeren Polycarbonsäuren (Formel (III)) innerhalb des Gemisches der Verbindungen der Formeln (I) bis (III) kann zwischen 0,1 und 99,8, vorzugsweise zwischen 30 und 70% liegen. Außerdem können die Polycarbonsäurehärter aus Mischungen von Einzelkomponenten mit unterschiedlichen Resten R, R' und R'' und Indices x, y, z, t und u bestehen.

Sehr wichtig ist das Mischungsverhältnis vom Polyester a) zum Polycarbonsäuregemisch b). Im allgemeinen hat sich ein Festkörperverhältnis der Komponente a) zu b) von 50 : 50 bis 90 : 10, vorzugsweise 60 : 40 bis 85 : 15, im speziellen jedoch 65 : 35 bis 75 : 25, bewährt.

Als Komponente c) werden epoxydierte Öle, z. B. solche auf Basis von Soja-, Lein-, Tall- und Ricinenöl mit einem Epoxyäquivalent jeweils von 100 bis 360, insbesondere von 150 bis 200 eingesetzt. Die Wasserlöslichkeit des Kondensationsproduktes aus den Komponenten a) bis c) wird durch Neutralisation mit basischen Verbindungen d) wie Ammoniak, aliphatischen Di- und tertiären Aminen wie Diisopropanolamin, Dimethyl- und Diäthylaminoäthanol sowie Trimethyl-, Triäthyl- und Tripropylamin erreicht.

Als Komponente B) werden Metallpulver einzeln oder im Gemisch wie Kupfer, Kupferlegierungen, Aluminium und Stahl, vorzugsweise Aluminiumpulver in wenigstens überwiegendem Anteil, eingesetzt, und zwar im allgemeinen 0,8 bis 50, vorzugsweise bis 15, im besonderen bis 5 Gew.-%, bezogen auf Bindemittel.

Als Farbstoffe bzw. Pigmente (Komponente D)), die anorganischer oder organischer Natur sein können, werden beispielsweise genannt Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Cadiumsulfid, Chromoxyd, Zinksulfid, Nickeltitangelb, Chromtitangelb, Eisenoxydrot, Eisenoxydschwarz, Ultramarinblau, Phthalocyaninkomplexe, Naphtholrot, Chinacridone, halogenierte Thioindigo-Pigmente oder dergleichen. Ihr Anteil wird so gewählt, daß der erwünschte Metallic-Effekt nicht unterdrückt wird.

Die eingesetzten Mischungen können auch weitere übliche Zusätze E) wie Füllstoffe, Stabilisatoren, Netzmittel, Dispergierhilfsmittel, Verlaufmittel, Entschäumer und Katalysatoren einzeln oder im Gemisch in den üblichen Mengen sowie geringe Mengen an mit Wasser nicht mischbaren Lösungsmitteln enthalten. Diese Substanzen können den Einzelkomponenten und/oder der Gesamtmischung zugesetzt werden. Als übliche Zusätze kommen auch andere Harze, z. B. zur Beschleunigung der Reaktivität in Frage, wie Aminharze, insbesondere Melaminharze, z. B. in Mengen von 1 bis 20 Gew.-%, bezogen auf die anderen Bindemittel.

Geeignete Füllstoffe sind z. B. Talkum, Glimmer, Kaolin, Kreide, Quarzmehl, Asbestmehl, Schiefermehl, Bariumsulfat, verschiedene Kieselsäuren, Silikate, Glasfasern, organische Fasern oder dergleichen.

Als mit Wasser nicht mischbare Lösungsmittel sind z. B. höhere Alkohole mit z. B. 4 bis 8 C-Atomen, wie n-Butanol, Isobutanol, die verschiedenen Pentanole, Hexanole und Octanole, ferner aliphatische und aromatische Kohlenwasserstoffe wie Benzinschnitte, Toluol, die verschiedenen Xylole Ester von Glykoläthern, z. B. die Essigsäureester des Äthyl- oder Butylglykols (=Äthylenglykolmonoäthyl- oder -butyläther).

Die erfindungsgemäßen Bindemittel werden zur Herstellung von Lacken mit Wasser versetzt. Sie enthalten die üblichen mit Wasser mischbaren Lösungsmittel, beispielsweise ein- oder mehrwertige Alkohole, Ester, Glykoläther oder Ketone; im einzelnen seien z. B. genannt tert.-Butanol, Äthyl- oder Butylglykol, Butyldiglykol (=Äthylenglykoldibutyläther), Äthylenglykoldimethyläther, Diäthylenglykoldimethyläther, Cyclohexanon, Methyläthylketon, Aceton, Isophoron und Mischungen davon.

Die Schichtdicken der einzelnen Lacküberzüge betragen bei dem Basislack im allgemeinen 10 bis 40, vorzugsweise 15 bis 25 µm, während die Deckschicht im allgemeinen Dicken von 20 bis 70, vorzugsweise 30 bis 50 µm aufweist.

Bei der Herstellung der Metallic-Lackschichten wird die wäßrige Bindemittelmischung auf eine vorbereitete Fläche aufgebracht, z. B. auf eine mit einem Füller versehene Automobilkarosserie aufgespritzt, an der Luft getrocknet und anschließend mit einem Decklack überzogen. Beide Schichten werden dann in einem Arbeitsgang, z. B. während 40 bis 10 Minuten bei 100 bis 180°C eingebrannt, wobei die Temperatur in Relation zu der Einbrennzeit steht.

Als Gegenstände und Flächengebilde, die mit den erfindungsgemäßen Bindemittelmischungen beschichtet werden können, eignen sich z. B. solche aus Metall, Kunststoff, Holz u. a.

In den nachfolgenden Beispielen beziehen sich die Symbole T und % stets auf das Gewicht.

## Beispiel 1

53 T einer 40%igen wäßrigen Lösung eines wasserlöslichen handelsüblichen Kondensationsproduktes auf Basis eines OH-Gruppen enthaltenden Polyesters (OH-Zahl etwa 100) aus Phthalsäureanhydrid, Trimethylolpropan und 2,2-Dimethylpropandiol, eines Bisanhydrids, wie es durch Umsetzung von 2 Mol Trimellithsäureanhydrid und 1 Mol Propandiol und nachfolgende Umlagerung erhalten wird, und eines epoxydierten Sojaöls mit einem Epoxydäquivalentgewicht von 170 bis 180, neutralisiert mit Dimethylaminoäthanol auf pH 6,5, werden mit 0,8 T hochdisperser, kapillaraktiver Kieselsäure, 9,8 T Aluminiumpaste (Metallgehalt 65%; Lösungsmittel: Testbenzin, Benzol; durchschnittliche Teilchengröße nach DIN 4190 20 µm; spezifisches Gewicht 1,5), 34 T Äthanol und 2,3 T Wasser zu einem Lack verarbeitet. Durch Zugabe von etwa 15 T eines Gemisches aus Äthanol und Wasser (Verhältnis 60 : 40) wird dieser Basislack auf eine zum Spritzen geeignete Auslaufzeit (DIN-Becher mit Düse 4 mm nach DIN 53 211) bei 20°C von 16 s verdünnt und auf einen Automobilfüllen pneumatisch aufgesprüht, so daß eine Trockenfilmstärke von 16 µm erzielt wird. Nach einer Ablüftungszeit von 5 min wird ein Klarlack der nachfolgenden Zusammensetzung als Decklackierung aufgespritzt und beide Schichten in einem Arbeitsgang 20 min bei 140°C eingebrannt.

Klarlack für Zweischicht-Metallic-Lackierung, bestehend aus: 56,6 T handelsüblichem fremdvernetzendem Acrylharz, (65%ig, gelöst in Xylol/n-Butanol, Verhältnis 3 : 1, dynamische Viskosität (50%ig in Xylol) 1140 mPa · s/20°C, Säurezahl 13, bezogen auf Festharz), 28,7 T mit Isobutanol partiell veräthertem Melaminharz (ca. 55%ig in Isobutanol/Xylol, Verhältnis 44 : 1, Molverhältnis Melamin : Formaldehyd = 1 : 4, veräthert mit 3 Mol Isobutanol, dynamische Viskosität (55% in Butanol) 500 mPa · s/20°C) als Härterkomponente, 1,5 T eines aromatischen Kohlenwasserstoffgemisches vom Siedebereich 180 bis 210°C, 5,3 T Isobutanol, und 9,7 T Xylol. Dieser Klarlack wird mit einem Kohlenwasserstoffgemisch vom Siedebereich 150 bis 180°C auf Spritzkonsistenz DIN-Becher mit Düse 4 mm nach DIN 53 211 26 s (23°C) eingestellt und in einer Trockenfilmstärke von 40 µm aufgebracht.

## Beispiel 2

Beispiel 1 wird wiederholt mit dem Unterschied, daß anstelle der 9,8 T Aluminiumpaste nur 6,6 T Aluminiumpaste und 3,2 T eines Kupferphthalocyaninpigments der reinen $\beta$-Modifikation (Dichte 1,6 g/cm$^3$, spezifische Oberfläche 57 m$^2$/g, mittlere Teilchengröße 0,066 µm) eingesetzt werden.

## Beispiel 3

Beispiel 1 wird wiederholt mit dem Unterschied, daß anstelle der 9,8 T Aluminiumpaste nur 6,6 T Aluminiumpaste und 3,2 T eines Benzimidazolonpigments (Dichte 1,5 g/cm$^3$, spezifische Oberfläche 17,5 m$^2$/g, mittlere Teilchengröße 0,23 µm) eingesetzt werden.

Nach Beispielen 2 und 3 erhält man Überzüge mit ähnlich guten Eigenschaften wie nach Beispiel 1.

## Vergleich 1

45 T eines partiell kondensierten handelsüblichen Alkydharzes, bestehend aus einem Ricinenalkyd und einem Maleinatöl (70%ig in Wasser/Diacetonalkohol 10 : 1); dynamische Viskosität (100 : 20 mit Wasser verdünnt) 90 mPa · s/20°C; Dichte 1,07 werden mit 4 T eines mit Methanol teilweise verätherten Melaminharzes (ca. 70%ig in Isobutanol, Molverhältnis Melamin : Formaldehyd = 1 : 4, veräthert mit 3 Mol Methanol, dynamische Viskosität (70%ig in Isobutanol) 2400 mPa · s/20°C, Säurezahl <1), 0,8 T pyrogener Kieselsäure, 9,8 T der im Beispiel 1 genannten Aluminiumpaste, 5,8 T Wasser zu einem Lack verarbeitet. Der Lack wird wie in Beispiel 1 verdünnt, aufgesprüht und eingebrannt.

## Vergleich 2

Vergleich 1 wurde wiederholt, wobei jedoch 22,5 T eines ölfreien gesättigten handelsüblichen Polyesterharzes (80%ig in Butylglykol: Butyldiglykol/Äthylglykol) (12 : 11 : 7), dynamische Viskosität (60%ig in Äthylglykol) 500 mPa · s : 20°C, Dichte 1,11, Säurezahl (bezogen auf Festharz DIN 53 402) 60 als Harzkomponente eingesetzt wurden.

Tabelle

| | Beispiel 1 | Vergleich 1 | Vergleich 2 |
|---|---|---|---|
| Lagerstabilität des Basislackes nach 90 Tagen Lagerung bei 20°C | keine Veränderung | starke Vergrauung der Aluminiumteilchen | geliert |
| Auftrag durch Spritzen | kein Ablaufen | Ablaufen »Gardinenbildung« und Kochblasen | Ablaufen »Gardinenbildung« und Kochblasen |
| Trocknungsgrad des Basislackes vor der Überlackierung nach 5′ Lufttrocknung | staubtrocken, klebfrei | klebt etwas | stark klebrig |
| Beurteilung der eingebrannten Zweischichtlackierung | einwandfreie Metalleffektlackierung mit hohem Glanz | wolkiger (Flop-)-Effekt; im Glanz deutlich schlechter als Beispiel 1 | starkes Anlösen des Basislackes und Aufschwimmen der Aluminiumteilchen in die Decklackschicht |

Formelblatt

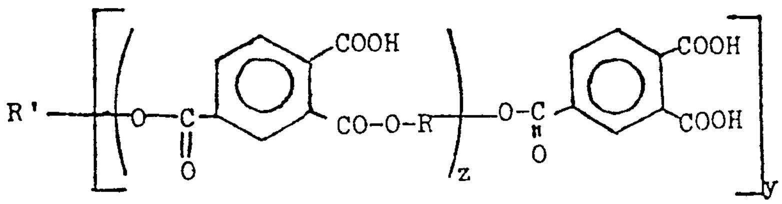

(I)

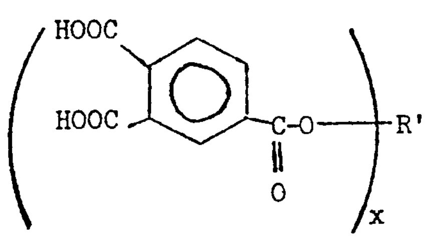

(II)

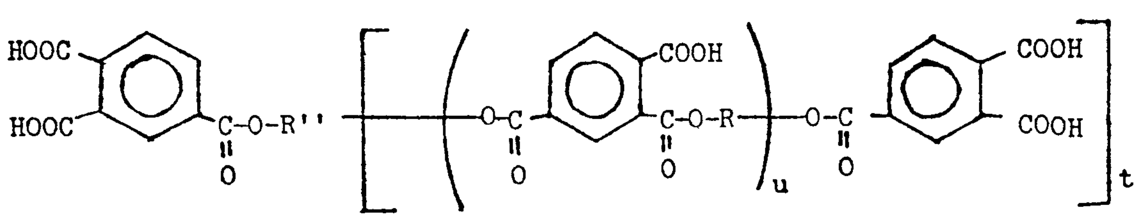

(III)

Fortsetzung

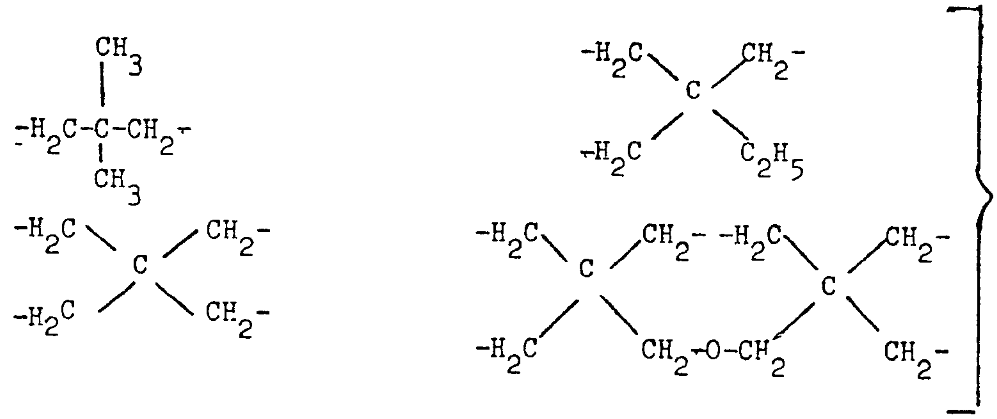

(IV)

**Patentansprüche**

1. Mit Wasser verdünnbare Bindemittelmischung zur Herstellung von Basis-Metallic-Lacken, dadurch gekennzeichnet, daß sie als Basis

A) ein wasserlösliches Kondensationsprodukt aus
  a) gesättigten oder ungesättigten ölfreien, OH-Gruppen enthaltenen Polyestern aus mindestens einer Polycarbonsäure und mindestens einem mehrwertigem Alkohol,
  b) einem von Trimellithsäure abgeleiteten und diese noch enthaltendem Polycarbonsäuregemisch,
  c) mindestens einem epoxydierten Öl und
  d) basischen Verbindungen und
B) Metallpulver,
C) mit Wasser mischbare Lösungsmittel und gegebenenfalls
D) andere Pigmente und/oder Farbstoffe sowie gegebenenfalls
E) weitere übliche Zusätze

enthält, wobei das Festkörpergewichtsverhältnis der Komponente a) zu Komponente b) 50 : 50 bis 90 : 10 beträgt.

2. Bindemittelmischung nach Anspruch 1, dadurch gekennzeichnet, daß die Komponente a) Hydroxylzahlen von 60 bis 150, vorzugsweise von 80 bis 120 und die Komponente c) Epoxyäquivalente von 100 bis 360, vorzugsweise von 150 bis 200 besitzen.

3. Bindemittelmischung nach Anspruch 1 oder 2, dadurch gekennzeichnet, daß die Komponente B) wenigstens überwiegend Aluminiumpulver ist.

4. Bindemittelmischung nach einem oder mehreren der Ansprüche 1 bis 3, dadurch gekennzeichnet, daß die Komponente B) in Mengen von 0,8 bis 50, vorzugsweise bis 15 und insbesondere bis 5 Gew.-%, bezogen auf Bindemittel, enthalten ist.

5. Bindemittelmischung nach einem oder mehreren der Ansprüche 1 bis 4, dadurch gekennzeichnet, daß Komponente A) ein Kondensationsprodukt aus a) einem Polyester aus Phthalsäureanhydrid, Trimethylolpropan und 2,2-Dimethylpropandiol, b) einem Bisanhydrid aus 2 Mol Trimellithsäureanhydrid und einem Mol Propandiol, c) einem epoxydierten Sojaöl mit einem Epoxyäquivalentgewicht von 170 bis 180 und d) Dimethylaminoäthanol, Komponente B) Aluminiumpulver und Komponente D) feinteilige Kieselsäure und Äthanol ist.

6. Verwendung der Bindemittelmischung nach einem oder mehreren der Ansprüche 1 bis 5 in wäßrigen Lacken zur Herstellung einer Zweischichten-Metallic-Lackierung aus Basis- und Decklackschicht.

7. Verwendung nach Anspruch 6, dadurch gekennzeichnet, daß die Basislackschicht weniger als 10 Minuten bei Raumtemperatur getrocknet wird.

8. Verwendung nach Anspruch 6 oder 7, dadurch gekennzeichnet, daß die Basislackschicht nach der Trocknung mit einer Decklackschciht versehen wird.

9. Verwendung nach einem oder mehreren der Ansprüche 6, 7 und 8, dadurch gekennzeichnet, daß der Wassergehalt des Lackes 40 bis 70 Gew.-%, bezogen auf die Summe von Wasser und Lösungsmittel, beträgt.

## Claims

1. A water-dilutable binder composition for the preparation of a metallic base paint characterized in that

A) a water-soluble condensation product derived from
   a) saturated or unsaturated oil-free polyesters containing OH-groups having been prepared from at least one polycarboxylic acid and at least one polyhydric alcohol,
   b) a polycarboxylic acid mixture derived from, and containing, trimellitic acid,
   c) at least one epoxidized oil, and
   d) a basic compound;
B) a metal powder
C) water miscible solvents and optionally
D) other pigments and/or dyestuffs and, if desired,
E) further conventional additives,

wherein the weight ratio of solids of component a) to component b) is between 50 : 50 and 90 : 10.

2. A binder composition according to claim 1, characterized in that component a) has a hydroxy number from 60 to 150, preferably from 80 to 120, and component c) has an epoxy equivalent from 100 to 360, preferably from 150 to 200.

3. A binder composition according to claim 1 or 2, characterized in that component B) is at least predominantly aluminium powder.

4. A binder composition according to one or more of claims 1 to 3, characterized in that component B) is present in an amount of from 0.8 to 50, preferably to 15 and especially to 5% by weight, referred to the binder.

5. A binder composition according to one or more of claims 1 to 4, characterized in that component A) is a condensation product derived from a) a polyester having been prepared from phthalic anhydride, trimethylolpropane and 2,2-dimethylpropanediol, b) a bis-anhydride prepared from 2 mols of trimellitic acid anhydride and one mol of propanediol, c) an epoxidized soya-bean oil having an epoxy equivalent weight from 170 to 180, and d) dimethylaminoethanol, component B) is aluminium powder and component D) is finely-divided silica and ethanol.

6. An application of the binder composition according to one or more of claims 1 to 5 in aqueous lacquers for the preparation of a 2-layer metallic coating consisting of a base coating layer and cover coating layer.

7. An application according to claim 6, characterized in that the base coating layer is dried within a period of time of less than 10 minutes at ambient temperature.

8. An application as claimed in claim 6 or 7, characterized in that the base coating layer is provided after drying with a cover coating layer.

9. An application according to one or more of claims 6, 7 and 8, characterized in that the water-content of the lacquer is from 70 to 77% by weight, referred to the total amount of water and solvent.

## Revendications

1. Mélange liant diluable à l'eau pour la préparation de peintures métallisées de base, mélange caractérisé en ce qu'il contient, comme constituants de base:

A) un produit de condensation hydrosoluble obtenu à partir:
   a) de polyesters saturés ou insaturés, dépourvus d'huile, porteurs de groupes —OH, qui dérivent d'au moins un acide polycarboxylique et d'au moins un polyol,
   b) d'un mélange d'acides polycarboxyliques dérivant de l'acide trimellitique et contenant encore de cet acide,
   c) d'au moins une huile époxydée, et
   d) de composés basiques,
B) une poudre métallique,
C) des solvants miscibles à l'eau, et éventuellement
D) d'autres pigments et/ou des colorants ainsi qu'éventuellement
E) d'autres additifs usuels,

le rapport pondéral, en matières solides, de la composante a) à la composante b) étant entre 50 : 50 et 90 : 10.

2. Mélange liant selon la revendication 1, caractérisé en ce que la composante a) a un indice d'hydroxy de 60 à 150, de préference de 80 à 120, et la composante c) a un équivalent d'époxy de 100 à 360, de préference de 150 à 200.

3. Mélange liant selon l'une des revendications 1 et 2, caractérisé en ce que la composante B) est, pour une proportion au moins prépondérante, de la poudre d'aluminium.

4. Mélange liant selon l'une quelconque des revendications 1 à 3, caractérisé en ce que la composante B) se trouve en une quantité comprise entre 0,8 et 50% en poids, de préférence d'au plus 15% en poids et plus particulièrement d'au plus 5% en poids, par rapport au liant.

5. Mélange liant selon l'une quelconque des revendications 1 à 4, caractérisé en ce que la composante A) est un produit résultant de la condensation a) d'un polyester dérivant de l'anhydride phtalique, du Triméthylolpropane et du diméthyl-2,2 propane-diol, b) d'un bisanhydride formé à partir de 2 moles d'anhydride trimellitique et de 1 mole de propane-diol, c) d'une huile de soja époxydée ayant un équivalent d'époxy de 170 à 180, et d) du diméthylamino-éthanol, la composante B) est une poudre d'aluminium et la composante D) est constituée d'une silice en fines particules et d'éthanol.

6. Application du mélange liant selon l'une quelconque des revendications 1 à 5, dans des peintures aqueuses pour la réalisation d'une peinture métallisée à deux couches comprenant une couche de peinture de base et une couche de vernis de surface.

7. Application selon la revendication 6, caractérisée en ce qu'on sèche la couche de peinture de base pendant moins de 10 minutes à la température ambiante.

8. Application selon l'une des revendications 6 et 7, caractérisée en ce que la couche de peinture de base, après avoir été séchée, est recouverte d'une couche de vernis de surface.

9. Application selon l'une quelconque des revendications 6, 7 et 8, caractérisée en ce que la teneur en eau de la peinture est comprise entre 40 et 70% en poids par rapport à la somme de la quantité d'eau et de la quantité de solvant.